# DEMANDE DE BREVET EUROPEEN

(11) **EP 0 864 388 A1**
(43) Date de publication de la demande: **16.09.1998**
(21) Numéro de dépôt: 98400467.1
(22) Date de dépôt: 27.02.1998
(51) Int. Cl.: B21K 1/08, B21D 53/84, B21D 26/02

(54) **Procédé de fabrication d'un vilebrequin notamment de moteur à combustion interne**

(30) Priorité: 12.03.1997 FR 9702908
(71) Demandeur: Ascometal, 92800 Puteaux (FR)
(72) Inventeur: Genouille, Michel, 91370 - Verrieres le Buisson (FR)
(74) Mandataire: Ventavoli, Roger

(57) **Abrégé**

Procédé de fabrication d'un vilebrequin (1), notamment de moteur à combustion interne, comprenant des paliers (2), des manetons (3), caractérisé en ce qu'à partir d'un tube de base en acier, rectiligne, longitudinal, d'un diamètre constant, on réalise par hydroformage une ébauche intermédiaire, comportant, coaxialement au tube des parties de longueur de tube de diamètres différents présentant chacune, alternativement, une préforme d'un maneton et d'un palier alignés,
on déforme l'ébauche intermédiaire obtenue pour déplacer transversalement les préformes des manetons,
on forge l'ébauche intermédiaire déformée suivant la direction axiale du tube de base.

## Description

La présente invention concerne un procédé de fabrication d'un vilebrequin, notamment de moteur à combustion interne, comprenant des paliers supports, axe de rotation du vilebrequin, des manetons positionnés sur au moins un axe parallèle à celui des paliers, des flasques séparant les manetons et paliers, un plateau d'extrémité d'arbre, les manetons étant destinés à porter les têtes des bielles qui entraînent en rotation le vilebrequin autour de son axe de rotation lors du fonctionnement du moteur.

Pour améliorer le rapport puissance sur masse déplacée, les constructeurs de véhicules automobiles cherchent à alléger tout élément de construction des véhicules et notamment, pour des raisons de confort, les éléments en mouvement rotatifs générant une inertie et des comportements de résonance mécanique.

Dans un moteur notamment à combustion interne, les masses des éléments destinées à être en mouvement telles que bielles, pistons, vilebrequin, constituant l'embiellage, génèrent un moment d'inertie qui doit être compensé par des contrepoids de façon que le centre de gravité de l'ensemble en mouvement soit placé sur l'axe de rotation du vilebrequin. Les constructeurs recherchent les moyens d'alléger les éléments en mouvement car plus les masses des éléments en mouvement seront allégées, plus les masses de compensation seront réduites, ce qui entraînera un allégement conséquent du moteur.

Jusqu'à présent, l'embiellage des moteurs a pu être allégé notamment en réduisant la masse des pistons et des bielles. Le vilebrequin compte tenu de sa forme présente des zones nécessairement volumique, notamment les manetons et paliers dont les dimensions sont imposées par la tenue des surfaces frottantes. L'allégement du vilebrequin par usinage intérieur des manetons et paliers ou par moulage prévoyant des évidements dans lesdites parties conduit à un coût de production élevé.

Le but de l'invention est de réduire les masses des éléments en mouvement de l'embiellage d'un moteur à combustion interne et, en particulier, de réduire la masse du vilebrequin, tout en conservant audit vilebrequin, des caractéristiques de résistance mécanique.

L'invention a pour objet un vilebrequin, notamment de moteur à combustion interne qui se caractérise en ce qu'à partir d'un tube de base en acier, rectiligne, longitudinal, d'un diamètre constant, on réalise par hydroformage une ébauche intermédiaire, comportant, coaxialement au tube des parties de longueur de tube de diamètres différents présentant chacune, alternativement, une préforme d'un maneton et d'un palier alignés, les préformes ayant une longueur supérieure à celle définie pour les manetons et les paliers du vilebrequin fini,
on déforme l'ébauche intermédiaire obtenue pour déplacer transversalement les préformes des manetons sur au moins un axe parallèle à l'axe des paliers,
on forge l'ébauche intermédiaire déformée suivant la direction axiale du tube de base de façon à ajuster notamment la longueur des manetons et paliers.

Les autres caractéristiques de l'invention sont :
- l'excédant de longueur définie pour les manetons et les paliers présente une forme adaptée assurant un excédant de matière d'une part, pour le déplacement dans l'opération de déformation des manetons par rapport aux paliers d'autre part, pour la réalisation de flaques et aussi pour la réalisation d'épaulements de maneton et palier.
- l'ébauche intermédiaire, présente, coaxialement au tube une partie de longueur de tube de diamètre supérieur à celui du tube de base assurant une préforme du plateau d'extrémité d'arbre.
- on forge, suivant la direction axiale du tube de base les flasques, les épaulements de manetons et paliers ainsi que les masses d'équilibrage.

L'invention concerne également le vilebrequin obtenu par le procédé.

L'invention concerne également le vilebrequin obtenu par le procédé.

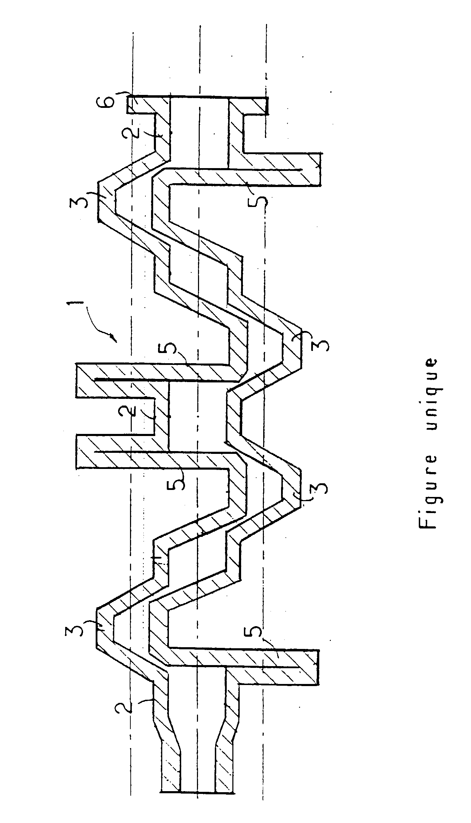

La description qui suit et la figure annexée le tout donné à titre d'exemple non limitatif fera bien comprendre l'invention.

Le vilebrequin est une pièce massive dont la géométrie générale est déterminée principalement par :
l'entraxe des paliers de cylindre,
la course des pistons liée à la distance entre axe de vilebrequin et axe de manetons,
les pressions limites de fonctionnement sous efforts dus au gaz de combustion associées aux diamètres des paliers et manetons.

Les deux premiers points cités ci-dessus résultent directement du choix architectural du moteur, le troisième point n'est qu'une limitation technologique qui conduit à la réalisation de manetons et paliers de diamètres importants.

Dans le cas d'un moteur peu chargé, le vilebrequin moulé en fonte devient à masse égale préférable du point de vue des coûts.

Dans le cas d'un moteur fortement chargé, à masse égale, le vilebrequin en acier est préféré grâce au fait que certaines nuances d'acier présente des limites en fatigue très élevées avec en plus un effet bénéfique du au fibrage.

Le vilebrequin en acier forgé dans la masse est cependant intrinsèquement cher du fait des surépaisseurs d'usinage importantes, de la dispersion géométrique relativement grande et de l'utilisation d'un acier de caractéristiques mécaniques élevées.

Selon l'invention, comme représenté sur la figure unique, le vilebrequin 1, de moteur à combustion interne, comprend des paliers 2 supports, axe de rotation du vilebrequin, des manetons 3 positionnés sur au moins un axe parallèle à celui des paliers 2, des flasques 5 séparant les manetons 3 et paliers 2, un plateau d'extrémité d'arbre 6, les manetons 3 étant destinés à porter les têtes des bielles qui entraînent en rotation le vilebrequin autour de son axe de rotation lors du fonctionnement du moteur.

A partir d'un tube de base en acier, rectiligne, longitudinal, d'un diamètre constant, on réalise par hydroformage une ébauche intermédiaire, présentant, coaxialement au tube des parties de longueur de tube de diamètres différents présentant chacune, alternativement, une préforme d'un maneton et d'un palier alignés. Les préformes comportent une longueur supérieure à celle définie pour les manetons et les paliers du vilebrequin, pièce finie. Les diamètres des préformes de maneton et de paliers sont après l'opération d'hydroformage, très proche de ceux prévus pour le vilebrequin à l'état final.

Le diamètre du tube de base peut avantageusement être égal au plus petit des deux diamètres, c'est à dire de manière courante, celui des manetons. La préforme est réalisée par augmentation de la pression à l'intérieur du tube de base, le tube étant logé dans une matrice reproduisant l'ébauche intermédiaire du point de vue diamètres et longueurs des paliers et manetons.

Lors d'une deuxième opération, on déforme l'ébauche intermédiaire obtenue pour déplacer transversalement les préformes des manetons sur au moins un axe parallèle à l'axe des paliers. Cette opération consiste à déformer latéralement l'ébauche au moyen d'outillage mobile qui positionne les manetons parallèlement à l'axe des paliers.

Il est possible de réaliser le vilebrequin en déformant en premier lieu le tube de base et en ajustant les différents diamètres des paliers et maneton en second lieu par hydroformage.

L'ébauche intermédiaire réalisée présente l'avantage d'avoir des côtes souhaitées voisines des cotes du vilebrequin final avec, en outre un très bon état de surface. Par ailleurs, le fibrage de l'acier du vilebrequin est optimisé.

L'ébauche intermédiaire, présente, également coaxialement au tube une partie de longueur de tube de diamètre supérieur à celui du tube de base assurant une préforme du plateau d'extrémité d'arbre.

on forge l'ébauche intermédiaire déformée suivant la direction axiale du tube de base de façon à ajuster la longueur des manetons et paliers.

L'excédant de longueur définie pour les manetons et les paliers présente une forme adaptée assurant un excédant de matière entre paliers de maneton, d'une part, pour le déplacement par déformation des manetons par rapport aux paliers d'autre part, pour la réalisation de flaques et d'épaulements de manetons et paliers.

L'ébauche intermédiaire déformée est selon l'invention chauffée puis forgée suivant une direction axiale au moyen d'un outillage dans lequel :

Le palier central du vilebrequin, dans le cas de vilebrequin ayant un nombre de paliers impair, est maintenu par un bras transversal, fixe dans la direction axiale de l'ébauche, le bras présentant sur ses faces latérales des gravures et les dimensions nécessaires à la mise en forme des deux flasques situés de part et d'autre du palier central.

Chacun des autres paliers ainsi que chaque maneton sont maintenus similairement par un bras également transversal en deux parties, chaque maneton et palier étant emprisonné entre deux demi alésages maintenus jointifs.

Les bras de l'outillage, par exemple, de part et d'autre du bras central sont mobiles suivant la direction axiale du vilebrequin et guidés par exemple sur des glissières parallèles.

Ces bras comportent aussi des gravures nécessaires et des épaisseurs dans le sens axial de vilebrequin correspondant respectivement à la longueur des paliers et manetons du vilebrequin final.
on forge, suivant la direction axiale du tube de base les flasques, les épaulements de manetons et paliers ainsi que les masses d'équilibrage.

Outre l'accès à des formes creuses, le procédé permet:
- d'obtenir des formes très proches des cotes finales, et donc de minimiser les coûts d'usinage,
- d'obtenir localement les épaisseurs strictement nécessaires et, en conséquence, d'assurer un gain de masse important,
- de garantir en toute zone critique du vilebrequin, un fibrage idéal, c'est à dire sans fibre coupée,
- de maintenir des coûts d'outillages relativement faible, dans la mesure où l'outillage d'hydroformage est simple, et où l'outillage de forge comporte des pièces comme par exemple les bras transversaux de petites dimensions pouvant éventuellement être standard et d'un remplacement facile et rapide, et aussi, dans la mesure où les différents outillages subissent une usure très inférieure à celle des outillages de forge utilisés dans un procédé de forge classique,
- de garantir une très faible dispersion de masse du vilebrequin, masse qui correspond à la masse du tube d'acier initial,
- d'avoir une très bonne qualité de surface intérieure du vilebrequin du fait de l'usage d'un tube d'acier de base étiré,
- d'avoir des efforts de déformation au forgeage relativement faible,
- de limiter considérablement l'énergie et le temps nécessaire à la mise en température homogène de l'ébauche déformée à forger,
- d'obtenir des caractéristiques mécaniques homogène,
- de minimiser les contraintes résiduelles et d'améliorer leur relaxation, facilitant ainsi la phase d'usinage,
- de diminuer de manière significative le coût de opération de perçage des paliers et manetons nécessaire à l'alimentation en huile desdits paliers et manetons,
- d'alimenter en huile sous pression l'ensemble des paliers et manetons à partir d'une extrémité du vilebrequin,
- d'augmenter la cadence de production.
- d'éliminer presque totalement la mise au mille hors usinage, la fuite de métal aux plans de joints étant très limitée, ce qui contribue à diminuer le coût matière.

Selon l'invention, le procédé réduit les déplacements de matière lors de la déformation de l'ébauche intermédiaire et le forgeage du vilebrequin et assure audit vilebrequin, une fabrication aisée, économique, et des caractéristiques mécaniques améliorées, notamment du point de vue fibrage.

## Revendications

1. Procédé de fabrication d'un vilebrequin (1), notamment de moteur à combustion interne, comprenant des paliers (2) supports et axe de rotation du vilebrequin, des manetons (3) positionnés sur au moins un axe parallèle à celui des paliers (2), des flasques (5) séparant les manetons (3) et paliers (2), un plateau d'extrémité d'arbre (6), les manetons (3) étant destinés à porter les têtes des bielles qui entraînent en rotation le vilebrequin autour de son axe de rotation lors du fonctionnement du moteur, caractérisé en ce qu'à partir d'un tube de base en acier, rectiligne, longitudinal, d'un diamètre constant, on réalise par hydroformage une ébauche intermédiaire, comportant, coaxialement au tube des parties de longueur de tube de diamètres différents présentant chacune, alternativement, une préforme d'un maneton et d'un palier alignés, les préformes ayant une longueur supérieure à celle définie pour les manetons et les paliers du vilebrequin fini,
on déforme l'ébauche intermédiaire obtenue pour déplacer transversalement les préformes des manetons sur au moins un axe parallèle à l'axe des paliers,
on forge l'ébauche intermédiaire déformée suivant la direction axiale du tube de base de façon à ajuster notamment la longueur des manetons et paliers.

2. Procédé selon la revendication 1 caractérisé en ce le tube de base a un diamètre extérieur correspondant au diamètre des manetons.

3. Procédé selon la revendication 1 caractérisé en ce que l'excédant de longueur définie pour les manetons et les paliers présente une forme adaptée assurant un excédant de matière d'une part, pour le déplacement dans l'opération de déformation des manetons par rapport aux paliers d'autre part, pour la réalisation de flaques, de masses de compensation et aussi pour la réalisation d'épaulements de maneton et palier.

4. Procédé selon la revendication 1 caractérisé en ce que l'ébauche intermédiaire, présente, coaxialement au tube une partie de longueur de tube de diamètre supérieur à celui du tube de base assurant une préforme du plateau d'extrémité d'arbre.

5. Procédé selon la revendication 1 caractérisé en ce qu'on forge, suivant la direction axiale du tube de base les flasques, les épaulements de manetons et paliers ainsi que les masses d'équilibrage.

6. Vilebrequin, notamment de moteur à combustion interne, comprenant des paliers (2) supports et axe de rotation du vilebrequin, des manetons (3) positionnés sur au moins un axe parallèle à celui des paliers (2), des flasques (5) séparant les manetons (3) et paliers (2), un plateau d'extrémité d'arbre (6), les manetons (3) étant destinés à porter les têtes des bielles qui entraînent en rotation le vilebrequin autour de son axe de rotation lors du fonctionnement du moteur, caractérisé en ce qu'il est réalisé par hydroformage suivi d'un forgeage par le procédé selon les revendications 1à 5.
